# EUROPÄISCHE PATENTANMELDUNG

(11) **EP 1 326 067 A2**
(43) Veröffentlichungstag der Anmeldung: **09.07.2003**
(21) Anmeldenummer: 02028479.0
(22) Anmeldetag: 19.12.2002
(51) Int. Cl.: G01M 7/02

(54) **Vibrations-Prüfschrank-Anlage**

(30) Priorität: 27.12.2001 DE 10163754; 21.01.2002 DE 10202240
(71) Anmelder: WEISS UMWELTTECHNIK GmbH, D-35447 Reiskirchen (DE)
(72) Erfinder: Hehl, Karl-Heinz, 35394 Giessen (DE)
(74) Vertreter: Stoffregen, Hans-Herbert, Dr. Dipl.-Phys. Patentanwalt

(57) **Zusammenfassung**

Die Erfindung bezieht sich auf eine Vibrations-Prüfschrank-Anlage umfassend einen temperierbaren und/oder klimatisierbare Prüfraum in einem Gehäuse eines Prüfschranks mit einer von einem Türelement verschließbaren Öffnung sowie einem Boden (30), der von einem Vibratorkopf (24) einer Vibrationseinrichtung durchsetzt ist, wobei entlang prüfraumseitiger Fläche des Vibratorkopfes ein gegenüber dem Boden abdichtendes Membranelement (32) verläuft. Um mit konstruktiv einfachem Aufbau sicherzustellen, dass die Vibrationseinrichtung gegenüber dem Prüfraum im hinreichenden Umfang thermisch isoliert ist, wird vorgeschlagen, dass das Membranelement als Thermobarriere ausgebildet ist.

## Beschreibung

Die Erfindung bezieht sich auf eine Vibrations-Prüfschrank-Anlage umfassend einen temperierbaren und/oder klimatisierbaren Prüfraum in einem Gehäuse eines Prüfschranks mit einer von einem Türelement verschließbaren Öffnung sowie einem Boden, der von einem Vibratorkopf einer Vibrationseinrichtung durchsetzt ist, wobei entlang prüfraumseitiger Fläche des Vibratorkopfes ein gegenüber dem Boden abdichtendes Membranelement verläuft.

In entsprechenden Vibrations-Prüfschrank-Anlagen werden z. B. Kraftfahrzeugheizungen und -klima-anlagen sowie ihre Komponenten getestet. Dabei werden Temperatur, Feuchtigkeit und mechanische Schwingungen als Einflussgrößen berücksichtigt.

Das Erzeugen mechanischer Schwingungen mittels der Vibrationseinrichtung, die üblicherweise ein elektrodynamischer Vibrator ist, und die Klimaprüfung können dabei unabhängig voneinander oder miteinander kombiniert werden. Für beide Prüfungen stehen separate Bedien- und Steuerelemente mit entsprechenden Schnittstellen für einen PC zur Verfügung.

Damit die zu testenden Gegenstände in dem Prüfraum positioniert und in Schwingungen versetzt werden können, weist der Boden des Prüfraums eine Durchbrechung auf, die vom Vibratorkopf durchsetzt ist, der seinerseits gehäuseseitig üblicherweise eine Thermobarriere aufweist, um eine Isolierung gegenüber dem Prüfraum zu ermöglichen. Durch das Anbringen der Thermobarriere am Vibrationskopf kann eine Änderung des Schwingungsverhaltens erfolgen, wodurch wiederum Prüfungsergebnisse beeinflusst werden.

Entlang der Thermobarriere erstreckt sich sodann eine Membran, die den Spalt zwischen Vibratorkopf und Durchbruch des Prüfraumbodens abdichtet. Von dem Vibratorkopf gehen des Weiteren Inserts aus, mittels derer die zu prüfenden Gegenstände fixiert werden.

Ungeachtet des Vorhandenseins der Thermobarriere treten im Bereich des Vibratorkopfes und insbesondere im Bereich von Schlitzen im vibratorkopfseitigen Bereich des Gehäuses der Vibrationseinrichtung Temperaturschwankungen in einem Umfang auf, dass sich Kondenswasser ansammeln kann, das zu Störungen bzw. Beschädigungen führen kann.

Um eine unmittelbare Wärmeübertragung zwischen einem Kolben einer Vibrationseinrichung und Halterung für in einem Prüfüngsschrank angeordnete Gegenstände zu reduzieren, ist nach der FR 2 705 457 A1 ein Isolierzwischenstück vorhanden, das mit einer den Prüfschrank bodenseitig verschließenden Membran verbunden ist. Zwischen dem Zwischenteil und von dem Membran abgedeckter Öffnung des Prüfschranks ist die Membran von der Umgebungsluft bzw. Prüfschrankinnenatmosphäre frei umspülbar, so dass bei größerer Temperaturdifferenz zwischen Prüfschrankinnerem und -äußerem eine Kondensatbildung auftreten bzw. sich das Schwingungsverhalten der Membran nicht reproduzierbar ändern kann.

Des Weiteren weisen bekannte Gehäuse von Prüfschränken relativ dicke Böden auf, so dass das Gehäuse der Vibrationseinrichtung in einem Umfang die Durchbrechung des Bodens durchsetzen muss, dass vorhandene Lüftungsschlitze in unmittelbarem Bereich des Bodens verlaufen, so dass die erforderliche Kühlung der Vibrationseinrichtung nicht im erforderlichen Umfang gewährleistet ist.

Der vorliegenden Erfindung liegt das Problem zu Grunde, einen Vibrations-Prüfschrank-Anlage der eingangs genannten Art so weiterzubilden, dass mit konstruktiv einfachem Aufbau sichergestellt ist, dass die Vibrationseinrichtung gegenüber dem Prüfraum im hinreichenden Umfang thermisch isoliert ist. Auch soll sichergestellt werden, dass eine Beeinflussung der Schwingung durch vorhandene Isolierungen weitgehend unterbunden wird.

Nach einem weiteren Aspekt der Erfindung soll die Möglichkeit geschaffen werden, dass Kühlluft im erforderlichen Umfang vibratorkopfseitig verlaufende Lüftungsschlitze der Vibrationseinrichtung bzw. deren Gehäuse durchsetzt. Auch soll das den Prüfschrank verschließende Thermoelement zu einer räumlichen Behinderung nicht führen.

Erfindungsgemäß wird das Problem im Wesentlichen dadurch gelöst, dass das Membranelement als eine Thermobarriere ausgebildet ist und/oder dass der Vibratorkopf und/oder ein prüfraumseitiger Aufsatz dieses und/oder vibratorkopfseitig verlaufender Bereich der Membran temperierbar ist. Dabei erfolgt das Temperieren insbesondere durch ein Fluid einstellbarer Temperatur. Eine Temperierung kann jedoch auch elektrisch erfolgen.

Sofern das Membranelement als Thermobarriere selbst ausgebildet ist, ergibt sich gegenüber den vorbekannten Konstruktionen der Vorteil, dass die normalerweise unmittelbar an dem Vibratorkopf befestigte Thermobarriere sowie das diese gegenüber dem Prüfraum abdichtende Membranelement durch ein einziges Element ersetzt werden, nämlich dadurch, dass das Membranelement selbst als Thermobarriere ausgebildet ist.

Dabei entspricht das Membranelement thermisch einer Schaumisoliermatte oder ist ein Abschnitt einer solchen.

Alternativ, insbesondere jedoch ergänzend erfolgt eine gezielte Temperierung des Vibrationskopfes bzw. der Vibrationseinrichtung dadurch, dass Temperierkanäle vorhanden sind, die mit einem Fluid wie insbesondere Gas einstellbarer Temperatur beaufschlagbar sind. Dabei können vibratorkopfseitig in dem Membranelement entsprechende Kanäle verlaufen, die vibratorkopfseitig offen sind. Selbstverständlich besteht auch die Möglichkeit, die Kanäle geschlossen auszubilden. Ergänzend oder alternativ können im Vibratorkopf selbst Kanäle verlaufen, die ebenfalls mit einem Fluid gewünschter Temperatur beaufschlagbar sind.

Insbesondere ist vorgesehen, dass die Temperierkanäle sternförmig mit einem vorzugsweise die Mittelachse der Vibrationseinrichtung schneidenden Schnittpunkt verlaufen.

Nach einem weiteren Vorschlag sieht die Erfindung vor, dass vom vibratorkopfseitigen Bereich der Vibrationseinrichtung bzw. deren Gehäuse ein zum Boden des Prüfraums führendes Abdichtelement der Abdichtmembran verläuft und zwischen dem Membranelement und dem Abdichtelement verlaufender Zwischenraum temperierbar ist. Dies erfolgt insbesondere dadurch, dass der Zwischenraum von einem Fluid wie einem Gas gewünschter Temperatur beaufschlagbar ist.

Aber auch bei Nichtvorhandensein eines Zwischenraums bestünde die Möglichkeit, den Vibratorkopf dadurch zu temperieren, dass dieser von einem temperierbaren Fluid umströmbar ist.

Ein selbständiger Lösungsvorschlag der Erfindung sieht vor, dass der Boden des Prüfschrankes als Vakuumisolierboden ausgebildet ist. Hierdurch ergibt sich der Vorteil, dass der Boden bei gleicher Isolierwirkung eine geringe Dicke aufweist mit der Folge, dass sichergestellt ist, dass das Gehäuse der Vibrationseinrichtung mit seinen Belüftungsschlitzen unterhalb der Außenfläche des Bodens verläuft, so dass im erforderlichen Umfang Kühlluft in das Gehäuse der Vibrationseinrichtung strömen kann. Insbesondere weist der Boden eine Dicke d mit 30 mm ≤ d ≤ 50 mm, insbesondere d in etwa 40 mm auf.

Schließlich sieht ein weiterer eigenerfinderischer Vorschlag der Erfindung vor, dass das den Prüfraum verschließende Türelement beabstandbar zum Prüfraum ist und wahlweise für eine an die Öffnung des Prüfraums angrenzenden Seitenwandung des Prüfraums ausrichtbar ist. Insbesondere ist das Türelement parallel zu der gewünschten Seitenwandung ausrichtbar und gegebenenfalls an diese anlegbar.

Dabei geht das Türelement vorzugsweise von einem außerhalb des Gehäuses und in dessen Kopfbereich verlaufenden Haltearm bzw. Ausleger aus, der als Teleskoparm oder Knickschwenkarm ausgebildet sein kann.

Weitere Einzelheiten, Vorteile und Merkmale der Erfindung ergeben sich nicht nur aus den Ansprüchen, den diesen zu entnehmenden Merkmalen - für sich und/oder in Kombination-, sondern auch aus der nachfolgenden Beschreibung von der Zeichnung zu entnehmenden bevorzugten Ausführungsbeispielen.

Es zeigen:
- Fig. 1: einen Ausschnitt einer Vibrations-Prüfschrank-Anlage konventionellen Aufbaus,
- Fig. 2: einen Ausschnitt einer Vibrations-Prüfschrank-Anlage nach der Erfindung,

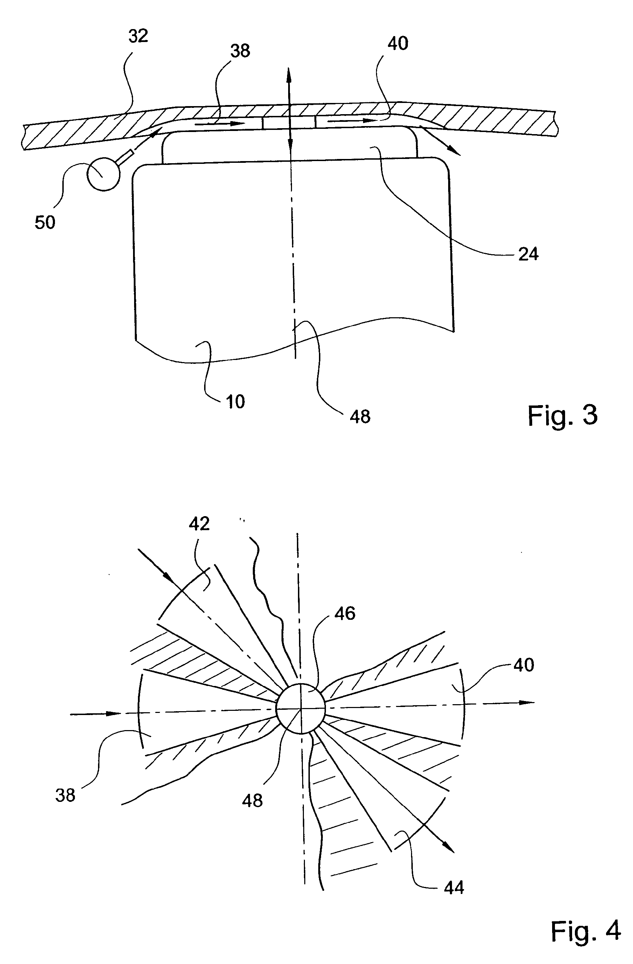

- Fig.3: eine erste Ausführungsform zum Temperieren eines Vibratorkopfes bestimmt für eine Vibrations-Prüfschrank-Anlage,
- Fig. 4: eine Unteransicht einer Membran und im Ausschnitt,
- Fig. 5: eine zweite Ausführungsform zum Temperieren eines Vibratorkopfes einer Vibrations-Prüfschrank-Anlage,
- Fig. 6: eine Seitenansicht eines Prüfschrankes bestimmt für eine VibrationsPrüfschrank-Anlage,
- Fig. 7: eine Draufsicht auf den Prüfschrank gemäß Fig. 6,
- Fig. 8: einen Ausschnitt einer Vibrations-Prüfschrank-Anlage im Bodenbereich des Prüfschrankes,
- Fig. 9: eine alternative Darstellung zu der Fig. 8 und
- Fig. 10: einen Ausschnitt einer Vibrations-Prüfschrank-Anlage im Bodenbereich des Prüfschranks.

In Vibrations-Prüfschrank-Anlagen können z.B. Kraftfahrzeugheizungen und/oder - klimaanlagen sowie deren Komponenten getestet werden. Entsprechende Anlagen umfassen als wesentliche Bestandteile einen Kälte-Wärme-Klima-Prüfschrank sowie einen elektrodynamischen Vibrator mit Vibratorkopf, an dem die zu prüfenden Gegenstände befestigt werden.

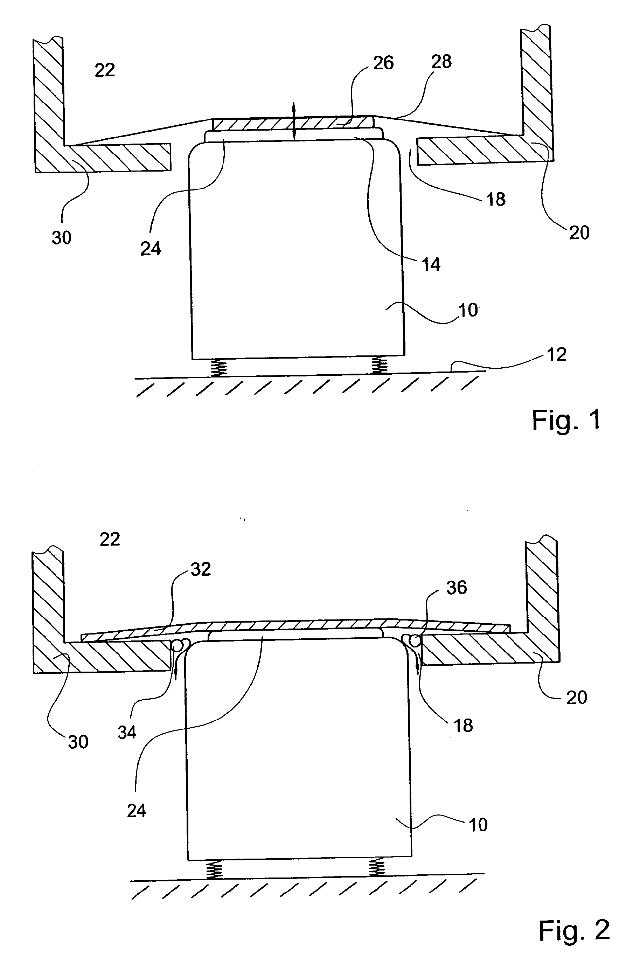

In Fig. 1 is rein prinzipiell ein entsprechender Vibrator - auch Vibrationseinrichtung genannt - bzw. dessen Gehäuse 10 dargestellt. Der Vibrator durchsetzt eine Öffnung 18 eines Gehäuses 20 eines Prüfschrankes, um einen Prüfraum 22 zu begrenzen, in dem ein oder mehrere zu prüfende Gegenstände angeordnet und mittels des Vibrators in Schwingung versetzt werden sollen. Hierzu gehen vom Kopf 24 des Vibrators sogenannte Inserts aus, mit Hilfe derer die Gegenstände fixiert werden. Da in dem Prüfraum 22 Temperaturen zwischen z.B. 180°C und -40 °C, gegebenenfalls - 70 °C, eingestellt werden, muss der Vibrator gegenüber dem Prüfraum 22 thermisch isoliert werden. Hierzu weist nach dem Stand der Technik (Fig. 1) der Vibratorkopf 24 prüfraumseitig eine Thermobarriere 26 auf, die ihrerseits prüfraumseitig von einer Membran 28 abgedeckt ist, die gegenüber dem Prüfraum bzw. dessen Boden 30 abgedichtet ist.

Um den Aufbau konstruktiv einfach zu gestalten, werden nach dem der Fig. 2 zu entnehmenden erfindungsgemäßen Vorschlag die nach dem Stand der Technik bekannte Thermobarriere und die Membran durch ein einziges Elemente ersetzt. Die entsprechende Membran ist mit dem Bezugszeichen 32 versehen. Die Membran 32 ist ebenfalls gegenüber dem Boden 30 des Gehäuses 20 abgedichtet. Die Membran 32 kann aus dem Schaumisoliermaterial bestehen oder dessen thermische Eigenschaften aufweisen.

Um zusätzlich zu verhindern, dass im Bereich des Vibratorkopfes 24 bzw. des Gehäuses 10 des Vibrators unerwünschte Temperaturschwankungen auftreten, die zu einer unerwünschten Messbeeinflussung führen können, kann der Vibratorkopf 24 von einem Fluid einstellbarer Temperatur umspült werden. Hierzu können im Bereich der Öffnung 18 des Bodens 30 Austrittsöffnungen bzw. Düsen für zuzuführendes Gas angeordnet sein, die rein beispielhaft mit den Bezugszeichen 34, 36 in Fig. 2 versehen sind. Dabei strömt aus den Düsen 34, 36 in Abhängigkeit von der Temperatur in dem Prüfraum 22 Kühlluft oder Heißluft.

Zur weitergehenden Temperierung des Prüfkopfes 24 bzw. des Gehäuses 10 des Vibrators können in der die Funktion einer Thermobarriere ausübenden Membran 32 Temperierkanäle 38, 40, 42, 44 ausgebildet sein, die geschlossen oder - entsprechend dem Ausführungsbeispiel - vibratorkopfseitig offen sind. Der Verlauf der Kanäle kann beliebig sein. Bevorzugterweise verlaufen die Kanäle in Bezug auf den Vibratorkopf 24 radial und weisen eine Schnittpunkt 46 auf, der von der Längsachse 48 des Gehäuses 10 des Vibrators durchsetzt wird.

Den Kanälen 38, 42 kann sodann über Düsen oder sonstige Austrittsöffnungen ein Fluid gewünschter Temperatur zugeführt werden.

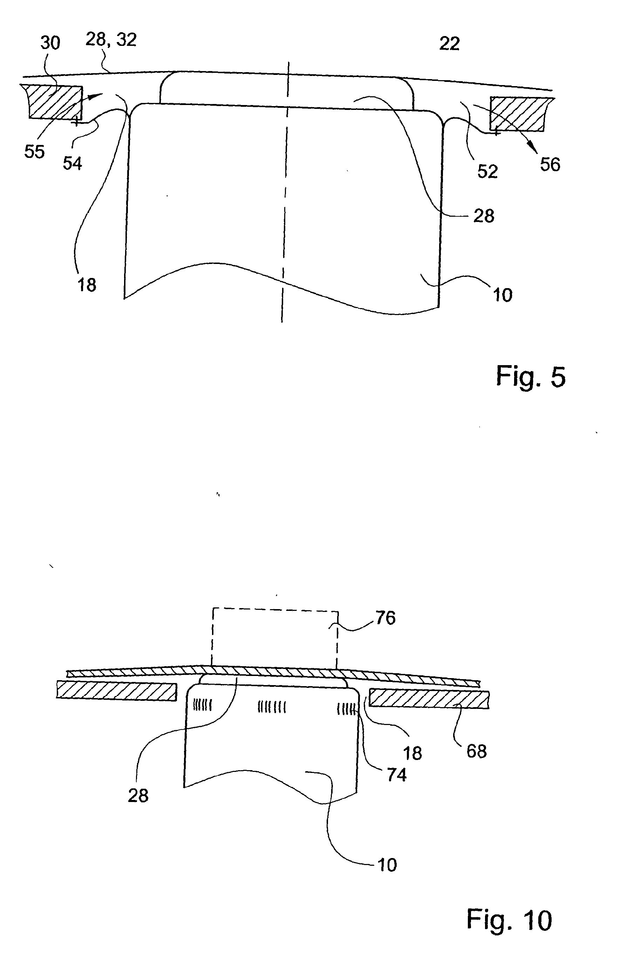

Nach dem Ausführungsbeispiel der Fig. 5 verläuft der Vibratorkopf 24 in einem Raum 52, der einerseits gegenüber dem Prüfraum 22 über eine Membran 28 bzw. 32 abgedichtet ist und andererseits von einem weiteren Abdichtelement 54 begrenzt ist, das von außenseitiger Fläche des Bodens 30 ausgeht und zur Außenwandung des Gehäuses 10 des Vibrators verläuft. Der so gebildete Zwischenraum 52 kann sodann mit gewünschter Luft beaufschlagt werden. Hierzu sind Zuluftöffnungen 55 und Abluftöffnungen 56 vorgesehen.

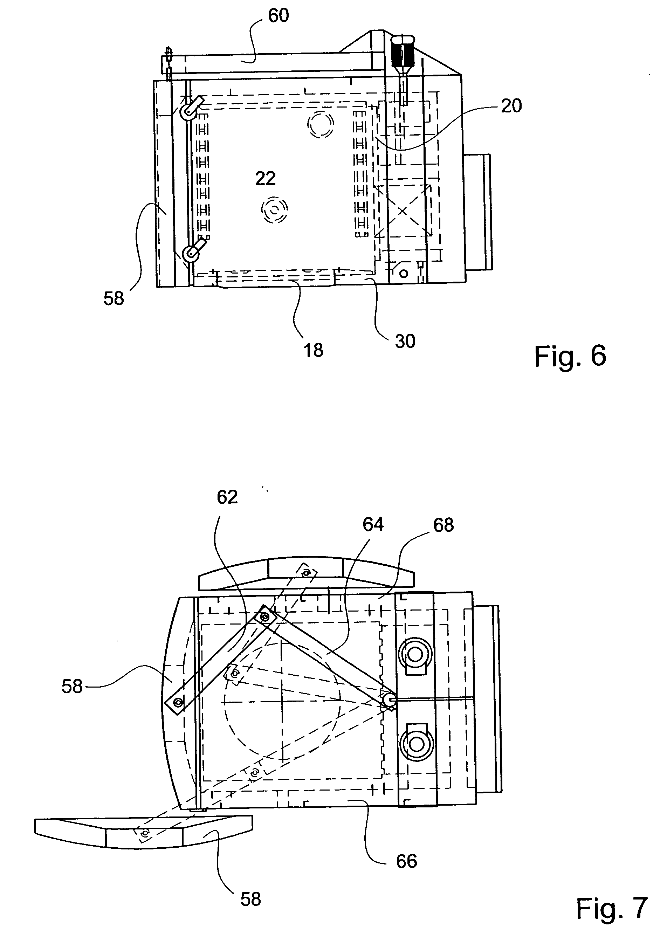

In den Fig. 6 und 7 ist rein prinzipiell ein Prüfschrank der erfindungsgemäßen Vibrations-Prüfschrank-Anlage dargestellt, dessen Boden 30 die Öffnung 18 aufweist, um den Vibrator in zuvor beschriebener Art auf diese auszurichten. Der Prüfraum 22 selbst ist über ein Türelement 58 verschließbar, das im Ausführungsbeispiel nach einem eigenerfinderischen Vorschlag von einem Ausleger 60 ausgeht, der im Rückwandbereich des Gehäuses 20 des Prüfschranks drehbar gelagert ist. Dabei kann es sich bei dem Ausleger 60 um einem Teleskopausleger oder - wie Fig. 7 verdeutlicht - um einen Knick-Schwenkarm mit zwei zueinander verstellbaren Schenkeln 62, 64 bestehen, um das Türelemente 58 einerseits von dem Gehäuse 20 zu beabstanden und andererseits auf eine an die Öffnung angrenzende Seitenwandung 66, 68 auszurichten, wie Fig. 7 rein prinzipiell verdeutlicht. Hierdurch ist ein platzsparendes Anordnen des Türelementes 58 möglich.

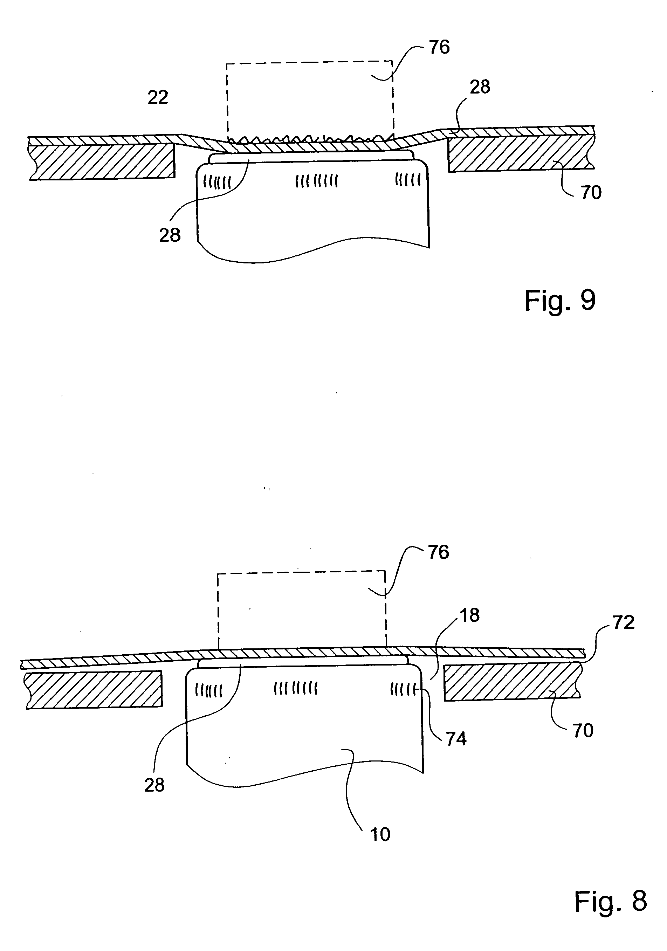

Ein ebenfalls eigenerfinderischer Vorschlag der Erfindung sieht vor, dass der Prüfraum 22 von einem Boden 68 begrenzt ist, der als Vakuumisolierboden ausgebildet ist und somit eine im Vergleich zu bekannten Böden eine geringere Dicke aufweist. Dies soll durch einen Vergleich der Fig. 8 bis 10 verdeutlicht werden. So sind den Fig. 8 und 9 bekannte Konstruktionen zu entnehmen, bei denen ein Prüfraum 22 von einem Boden 70 üblicher Dicke begrenzt ist. Da ein ordnungsgemäßes Ausrichten des Prüflings 76 grundsätzlich verlangt, dass der Vibratorkopf 28 zumindest der Höhe der Innenfläche 72 des Bodens verläuft, ergibt sich der Nachteil, dass in vibratorkopfseitigem Bereich des Gehäuses 10 vorhandene Lüftungsschlitze 74 innerhalb der Öffnung 18 des Bodens 70 verlaufen und somit die gewünschte Kühlung nicht erfolgt.

Um dies zu vermeiden besteht nach dem Stand der Technik die Möglichkeit, den Vibratorkopf 28 tiefer anzuordnen (Fig. 9). Hierdurch ergibt sich jedoch der Nachteil, dass sich eine Senke in der den Vibratorkopf 28 gegenüber dem Prüfraum 22 abdichtenden Membran 28 ausbildet, in der der Prüfling angeordnet ist, so dass sich Kondensat ansammeln kann. Außerdem besteht die Gefahr, dass bei in Schwingung versetztem Prüfling 76 dieser den Boden 70 berührt.

All diese Nachteile sind durch den erfindungsgemäßen als Vakuumisolierboden ausgebildeten Boden 68 behoben, da auch dann, wenn der Prüfkopf 28 auf der Höhe der Innenfläche des Prüfbodens 68 verläuft, die Lüftungsschlitze 74 des Gehäuses 10 des Vibrators außerhalb der Öffnung 18 verlaufen.

## Patentansprüche

1. Vibrations-Prüfschrank-Anlage umfassend einen temperierbaren und/oder klimatisierbare Prüfraum in einem Gehäuse eines Prüfschranks mit einer von einem Türelement (58) verschließbaren Öffnung sowie einem Boden (30, 68), der von einem Vibratorkopf (24) einer Vibrationseinrichtung durchsetzt ist, wobei entlang prüfraumseitiger Fläche des Vibratorkopfes ein gegenüber dem Boden abdichtendes Membranelement (32) verläuft,
**dadurch gekennzeichnet,**
**dass** das Membranelement (32) als Thermobarriere ausgebildet ist und/oder dass der Vibratorkopf (24) und/oder prüfraumseitiger Aufsatz dieses und/oder vibratorkopfseitig verlaufender Bereich des Membranelementes temperierbar ist.

2. Vibrations-Prüfschrank-Anlage nach Anspruch 1,
**dadurch gekennzeichnet,**
**dass** im vibratorkopfseitigen Bereich des Membranelementes (32) und/oder membranseitigem Bereich des Vibrationskopfes (24) Temperierkanäle (38, 40, 42,44) verlaufen.

3. Vibrations-Prüfschrank-Anlage nach Anspruch 1 oder 2,
**dadurch gekennzeichnet,**
**dass** die Temperierkanäle (38, 40, 42, 44) vibrationskopf- bzw. membranseitig offen sind.

4. Vibrations-Prüfschrank-Anlage nach zumindest einem der vorhergehenden Ansprüche,
**dadurch gekennzeichnet,**
**dass** die Temperierkanäle (38, 40, 42, 44) vorzugsweise sternförmig in einem insbesondere die Mittelachse (48) der Vibrationseinrichtung schneidenden Schnittpunkt (46) verlaufen.

5. Vibrations-Prüfschrank-Anlage nach zumindest einem der vorhergehenden Ansprüche,
**dadurch gekennzeichnet,**
**dass** das Membranelement (32) thermisch einer Schaumisoliermatte entspricht oder eine solche ist.

6. Vibrations-Prüfschrank-Anlage nach zumindest einem der vorhergehenden Ansprüche,
**dadurch gekennzeichnet,**
**dass** die Temperierkanäle (38, 40, 42, 44) vorzugsweise von einem gasförmigen Fluid beaufschlagbar sind.

7. Vibrations-Prüfschrank-Anlage nach zumindest einem der vorhergehenden Ansprüche,
**dadurch gekennzeichnet,**
**dass** vom vibratorkopfseitigen Bereich der Vibrationseinrichtung ein zum Boden (30) des Prüfraums (22) führendes Abdichtelement wie Abdichtmembran (54) verläuft und dass zwischen dem Membranelement (32) und dem Abdichtelement verlaufender Zwischenraum (52) temperierbar ist.

8. Vibrations-Prüfschrank-Anlage nach zumindest einem der vorhergehenden Ansprüche,
**dadurch gekennzeichnet,**
**dass** der Zwischenraum (52) von einem temperierten Fluid durchströmbar ist.

9. Vibrations-Prüfschrank-Anlage nach zumindest einem der vorhergehenden Ansprüche,
**dadurch gekennzeichnet,**
**dass** der Vibratorkopf (24) von einem temperierbaren Fluid umströmbar ist.

10. Vibrations-Prüfschrank-Anlage nach vorzugsweise einem der vorhergehenden Ansprüche,
**dadurch gekennzeichnet,**
**dass** der Boden (68) des Prüfraums (22) als Vakuumisolierboden ausgebildet ist.

11. Vibrations-Prüfschrank-Anlage nach zumindest einem der vorhergehenden Ansprüche,
**dadurch gekennzeichnet,**
**dass** der Vakuumisolierboden (68) eine Dicke derart aufweist, dass im vibratorkopfseitigen Bereich des Vibrators bzw. dessen Gehäuses (10) verlaufende Lüftungschlitze (74) unterhalb oder im Wesentlichen unterhalb von von vibratorkopfseitig verlaufender Fläche des Thermoisolierbodens aufgespannter Ebene verlaufen.

12. Vibrations-Prüfschrank-Anlage nach zumindest einem der vorhergehenden Ansprüche,
**dadurch gekennzeichnet,**
**dass** der Thermoisolierboden (68) eine Dicke d mit 30 mm ≤ d ≤ 50 mm, insbesondere d in etwa 40 mm aufweist.

13. Vibrations-Prüfschrank-Anlage nach vorzugsweise einem der vorhergehenden Ansprüche,
**dadurch gekennzeichnet,**
**dass** das den Prüfraum (22) verschließende Türelement (58) zu dem Prüfraum (22) bzw. dem diesen umgebenden Gehäuse (20) beabstandbar ist und wahlweise zu einer an der von dem Türelement verschließbaren Öffnung angrenzenden Seitenwandung (66, 68) des Prüfraums ausrichtbar ist.

14. Vibrations-Prüfschrank-Anlage nach zumindest einem der vorhergehenden Ansprüche,
**dadurch gekennzeichnet,**
**dass** das Türelement (58) parallel zu der Seitenwandung (66, 68) ausrichtbar und gegebenenfalls an diese anlegbar ist.

15. Vibrations-Prüfschrank-Anlage nach zumindest einem der vorhergehenden Ansprüche,
**dadurch gekennzeichnet,**
**dass** das Türelement (58) von einem außerhalb des Gehäuses (20) und in dessen Kopfbereich verlaufenden Haltearm bzw. Ausleger (60) ausgeht.

16. Vibrations-Prüfschrank-Anlage nach zumindest einem der vorhergehenden Ansprüche,
**dadurch gekennzeichnet,**
**dass** der Haltearm (60) als Teleskoparm ausgebildet ist.

17. Vibrations-Prüfschrank-Anlage nach zumindest einem der vorhergehenden Ansprüche,
**dadurch gekennzeichnet,**
**dass** der Haltearm (60) als Knick-Schwenkarm ausgebildet ist.
